# EUROPÄISCHE PATENTSCHRIFT

(11) **EP 1 641 659 B1**
(45) Veröffentlichungstag und Bekanntmachung des Hinweises auf die Patenterteilung: **19.10.2011**
(21) Anmeldenummer: 03788847.6
(22) Anmeldetag: 03.12.2003
(51) Int. Cl.: B60S 1/04

(54) **SCHEIBENWISCHVORRICHTUNG, INSBESONDERE FÜR EIN KRAFTFAHRZEUG**
WINDSHIELD WIPING DEVICE, ESPECIALLY FOR A MOTOR VEHICLE
DISPOSITIF ESSUIE-GLACE, NOTAMMENT POUR UN VEHICULE AUTOMOBILE

(30) Priorität: 30.06.2003 DE 10329570
(43) Veröffentlichungstag der Anmeldung: 05.04.2006
(73) Patentinhaber: ROBERT BOSCH GMBH, 70442 Stuttgart (DE)
(72) Erfinder: MAYER, Stephan, 76137 Karlsruhe (DE)
(86) Internationale Anmeldenummer: PCT/DE2003/003979
(87) Internationale Veröffentlichungsnummer: WO 2005/000641

(56) Entgegenhaltungen:
- WO-A-02/14123
- PATENT ABSTRACTS OF JAPAN vol. 2000, no. 13, 5. Februar 2001 (2001-02-05) -& JP 2000 289576 A (ASMO CO LTD), 17. Oktober 2000 (2000-10-17)
- PATENT ABSTRACTS OF JAPAN vol. 2000, no. 14, 5. März 2001 (2001-03-05) -& JP 2000 326832 A (MITSUBISHI MOTORS CORP), 28. November 2000 (2000-11-28)
- PATENT ABSTRACTS OF JAPAN vol. 2000, no. 14, 5. März 2001 (2001-03-05) & JP 2000 326829 A (MITSUBISHI MOTORS CORP), 28. November 2000 (2000-11-28)

## Beschreibung

### Stand der Technik

Die Erfindung betrifft eine Scheibenwischvorrichtung, insbesondere für ein Kraftfahrzeug, nach dem Oberbegriff des unabhängigen Anspruchs.

Es sind schon zahlreiche Scheibenwischvorrichtungen bekannt, beispielsweise aus der DE-A-199 03 140, die derart ausgebildet sind, dass beim Aufprall eines Fußgängers auf die Wischerwellen des Kraftfahrzeugs diese zurückweichen und im Inneren der Karosserie abtauchen. Auf diese Weise soll die Verletzungsgefahr für einen Fußgänger durch die aus der Karosserie herausragenden Wischerwellen reduziert werden. Hierzu ist vorgeschlagen worden, die Befestigungsteile der Scheibenwischvorrichtung mit Sollbruchstellen zu versehen, sodass beim Aufprall eines Fußgängers die gesamte Scheibenwischvorrichtung aus ihrer Verankerung bricht und im Inneren der Karosserie abtaucht.

Weiterhin ist hierzu bekannt geworden, die Motorhaube des Kraftfahrzeugs im Falle eines Aufpralles anzuheben, sodass eine Berührung des aufprallenden Fußgängers mit den Wischerwellen vermieden wird. Derartige Vorrichtungen sind jedoch kostenintensiv und daher für kleinere Fahrzeuge unpraktikabel.

Eine gattungsgemäße Wischvorrichtung ist im Dokument JP-A-2000289576 offenbart.

### Vorteile der Erfindung

Die erfindungsgemäße Scheibenwischvorrichtung mit den Merkmalen des Hauptanspruchs hat den Vorteil, dass das Befestigungsteil Mittel aufweist, die in einer

Führung der Karosserie beweglich sind. Auf diese Weise wird erzielt, dass die Scheibenwischanlage beim Aufprall eines Fußgängers, also bei einer axialen Krafteinwirkung auf eine Wischerwelle, ins Innere der Karosserie auf einer gezielten Bahn abzutauchen vermag. Damit können die geometrischen Besonderheiten des Einbauraums der Scheibenwischanlage berücksichtigt werden. Darüber hinaus wird so die Verschiebungsgeschwindigkeit der Welle und damit der Verlauf der auf den auftreffenden Körper wirkenden Kraft beeinflusst werden.

Durch die in den Unteransprüchen aufgeführten Maßnahmen ergeben sich vorteilhafte Weiterbildungen und Verbesserungen der im Hauptanspruch angegebenen Merkmale.

Erfindungsgemäß ist die Führung als Schienenführung ausgebildet, in der das mindestens eine Mittel zu gleiten vermag, so kann das Befestigungsteil in einfacher Weise aus Zink- oder Aludruckguss, einem Kunststoffspritzgussverfahren oder als einfaches Stanzbiegeteil ausgebildet werden. Darüber hinaus kann auch die Führung als einfaches Stanzbiegeteil ausgebildet werden. Vorteilhafterweise ergibt sich so eine kostengünstige Ausbildung der erfindungsgemäßen Scheibenwischvorrichtung.

Erfindungsgemäß weist die Führung und/oder das Befestigungsteil ein Rastelement zur Arretierung auf, so kann die Scheibenwischvorrichtung einfach und schnell bei der Montage ins Kraftfahrzeug eingebaut werden.

Besonders vorteilhaft ist hierbei, wenn das Rastelement derart ausgebildet ist, dass bei Schlagbelastung die Arretierung gelöst wird, sodass die Wischerwellen bei einer im Wesentlichen axialen Krafteinwirkung ins Innere der Karosserie abtauchen und trotzdem ein fester Halt der Scheibenwischvorrichtung im Normalbetrieb gewährleistet ist.

Besonders vorteilhaft ist, wenn die Führung und/oder das Mittel ein Entkopplungsmittel zur Entkopplung von Befestigungsteil und Führung aufweisen, um den zur Verfügung stehenden Bauraum für ein Zurückweichen der Scheibenwischvorrichtung beim Aufprall vollständig auszunutzen.

Hierbei ist es als vorteilhaft anzusehen, wenn ein Löseelement vorgesehen ist, sodass das Befestigungsteil bei Entkopplung der Führung aus dieser herausgelöst, insbesondere herausgekippt wird.

Eine einfache und schnelle Montage der Scheibenwischvorrichtung wird dadurch erzielt, dass die Führung oder das Mittel ein Einsetzmittel zum leichten Verbinden von Führung und Mittel aufweist.

Ist ein Träger vorgesehen, der die wesentlichen Komponenten der Scheibenwischvorrichtung trägt und ist das Befestigungsmittel mittels eines Dämpfungselementes an dem Träger befestigt, so können Standardbauelemente für Scheibenwischvorrichtungen verwendet werden, da auf Dämpfungselemente zwischen Scheibenwischvorrichtung und Karosserie im Bereich der Führung verzichtet werden kann.

Besonders vorteilhaft ist es darüber hinaus, wenn der Träger einen Biegebereich mit verminderter Biegesteifigkeit aufweist, da hierdurch der Träger beim Aufprall eines Körpers auf die Lagerwelle leichter deformierbar ist. Dies ist insbesondere dann vorteilhaft, wenn die Krafteinwirkung auf die Wischerwelle nicht exakt axial und nicht auf alle Wischerwellen gleichmäßig erfolgt, was üblicherweise bei einem Aufprall eines Fußgängers der Fall ist.

### Zeichnungen

Ein Ausführungsbeispiel der Erfindung ist in den Zeichnungen dargestellt und in der nachfolgenden Beschreibung näher erläutert. Es zeigen:
Figur 1 eine erfindungsgemäße Scheibenwischvorrichtung in perspektivischer Darstellung,
Figur 2 eine erfindungsgemäße Scheibenwischvorrichtung vor und nach einer axialen Krafteinwirkung auf die Wischerwelle,
Figur 3 das Befestigungsteil der Scheibenwischvorrichtung im Normalbetrieb mit der Führung im Detail,
Figur 4 das Befestigungsteil der Scheibenwischvorrichtung mit der Führung nach einem Aufprall im Detail,
Figur 5 das Befestigungsteil mit der Führung aus Figur 4 in einer Rückansicht,
Figur 6 die Führung und das Befestigungsteil aus Figur 4 mit einer Anschlagsbegrenzung von unten aus betrachtet und
Figur 7 ein Befestigungsteil bei der Entkopplung aus der Führung.

### Beschreibung des Ausführungsbeispiels

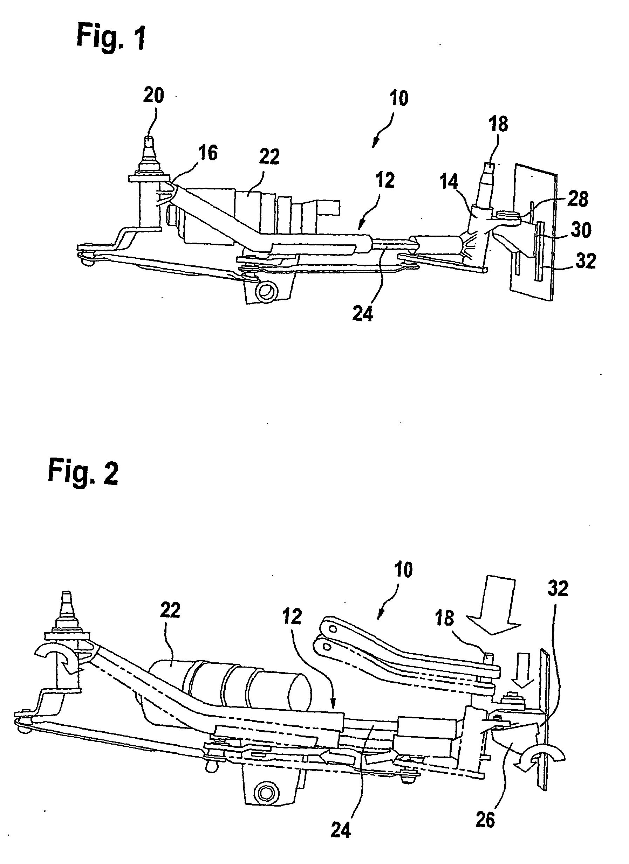

In Figur 1 ist eine erfindungsgemäße Scheibenwischvorrichtung 10 in einer perspektivischen Darstellung gezeigt. Diese umfasst im Wesentlichen einen Träger 12, der aus einem Metallrohr besteht, das an seinen beiden Enden jeweils ein Wischerlager 14, 16 trägt. In den Wischerlagern 14, 16 ist jeweils eine Wischerwelle 18, 20 gelagert, die in montierter Position aus der Karosserie der Kraftfahrzeugs herausragt und an denen die Wischerarme mit den Wischblättern befestigt sind. Weiterhin ist am Träger 12 eine Antriebseinrichtung 22 befestigt, welche über ein Kurbelgetriebe die Wischerwellen 18, 20 in Bewegung zu versetzen vermag. Der Träger 12 weist einen Biegebereich 24 auf, in dem die Biegesteifigkeit des Rohrs vermindert ist. Weiterhin ist an einem Ende des Rohrs 12 am Wischerlager 14 ein Befestigungsteil 26 angeordnet, das durch eine Schraube mit einer Gummimuffe als Dämpfungselement 28 befestigt ist. Alternativ kann das Befestigungsteil 26 auch an das Wischerlager 14 genietet, geklebt oder einstückig mit demselben ausgebildet sein. Das Befestigungsteil 26 weist zwei Schienen als Mittel 30 zur beweglichen Befestigung an der Karosserie des Kraftfahrzeugs auf. Die Schienen 30 gleiten in einer Führung 32, die an der Karosserie des Kraftfahrzeuges angeordnet ist. Alternativ kann die Führung 32 natürlich auch einstückig mit der Karosserie ausgebildet sein.

In Figur 2 ist eine erfindungsgemäße Scheibenwischvorrichtung vor und nach einer axialen Krafteinwirkung auf die Wischerwelle 18 dargestellt. Durch die axiale Krafteinwirkung F auf die Wischerwelle 18 wurde das Befestigungsteil 26 in der Führung 32 nach unten geschoben und teilweise aus der Führung 32 gelöst. Der Biegebereich 24 des Trägers 12 wurde hierbei beansprucht.

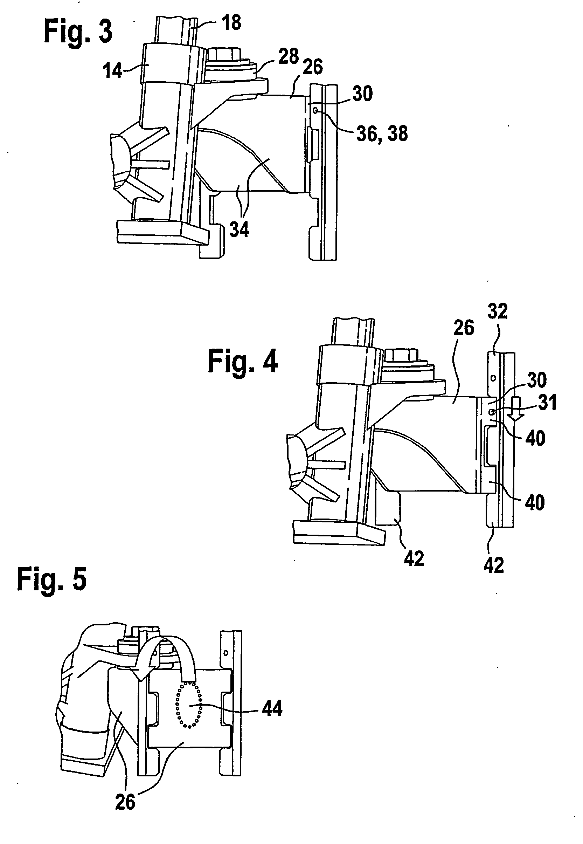

In Figur 3 ist das Befestigungsteil 26 mit dem Wischerlager 14 und der Wischerwelle 18 im Detail dargestellt. Das Befestigungsteil 26 ist durch eine Schraube mit einem Dämpfungselement 28 am Wischerlager 14 befestigt. Das Befestigungsteil 26 besteht im Wesentlichen aus einer ebenen, etwa U-förmigen Platte, die mit dem Dämpfungselement 28 am Wischerlager 14 etwa senkrecht zur Wischerwelle 18 verschraubt ist. An der Berandung der Platte erstreckt sich kragenartig eine Stabilisierungswand 34 senkrecht zur Platte. Auf der der Basis der U-förmigen Platte abgewandten Seite erstrecken sich von den Stabilisierungswänden 34 aus die Schienen 30 die sich in ihrer Längserstreckung senkrecht zur Platte und damit etwa parallel zur Wischerwelle 18 erstrecken. Die Schienen 30 sind durch jeweils zwei lappenartige Fortsätze gebildet, die sich parallel zur Befestigungswand der Karosserie des Fahrzeugs erstrecken. Im mittleren Bereich der Längserstreckung sind die Schienen 30 ausgespart.

Die Führung 32 ist als im Wesentlichen im Querschnitt abschnittsweise Z-förmige längliches Blechteil ausgebildet. Eine Endseite des Z-förmigen Blechteils ist entlang der Längserstreckung auf dem Karosserieblech befestigt, so dass die zweite Endseite des Z-förmigen Blechteils etwa 1 bis 3 mm - je nach Dicke der Schiene - vom Karosserieblech beabstandet ist und zwar derart, dass die Schiene 30 darin zu gleiten vermag. Zur Arretierung weisen die Schienen 30 einen Bolzen als Rastelement 36 auf, der sich senkrecht aus der durch die Führung gebildete Führungsebene heraus erstreckt und durch eine Öffnung 38 in einer Endseite der Führung 32 hindurchtritt.

Figur 4 zeigt ein Befestigungsteil 26 in der Führung 32 bei der Entkopplung. Korrespondierend zu den Schienen 30 weist die Führung 32 zwei Aussparungen 40 auf, sodass das Befestigungsteil 26 in einer vorbestimmten Position innerhalb der Führung 32 von derselben entkoppelt werden kann. Um bei einem Aufprall aus dieser Entkoppelposition nicht herauszugleiten, sind Anschläge 42 an der Führung 32 vorgesehen, über die das Befestigungsteil 26 nicht hinausgeschoben werden kann. Die Anschläge sind dadurch realisiert, dass die vom Blech beabstandeten Endseiten der Führung 32 in Richtung der Karosserie gebogen sind. Alternativ können hier aber auch Schweißpunkte oder andere Blockiermittel vorgesehen sein.

In Figur 5 ist das Befestigungsteil 26 von der Seite der Karosserie aus betrachtet, gezeigt. Die Stabilisierungswand des Befestigungsteils 26 weist in Richtung des Karosserieblechs einen Nocken 44 auf, der mit einer Biegung im Karosserieblech eine Schräge bildet, sodass das Befestigungsteil 26, wenn es die Entkopplungsposition an den Anschlägen 42 erreicht hat, nach außen gedrückt wird und somit von der Karosseriewand weggekippt wird. Durch gezielte Versteifungsmaßnahmen des Karosseriebleches wie Sicken, Wandstärke, Schwächung durch Ausstanzung kann das Verhältnis zwischen Kraftverlauf und Zeit beim Aufprall dadurch beeinflusst werden. Um eine sichere Halterung zu gewährleisten, können beispielsweise noch eine oder mehrere Federzungen und/oder Rasten im Karosserieblech oder im Befestigungsteil 26 vorgesehen sein, um ein ungewolltes Verschieben des Befestigungsteils 26 zu verhindern.

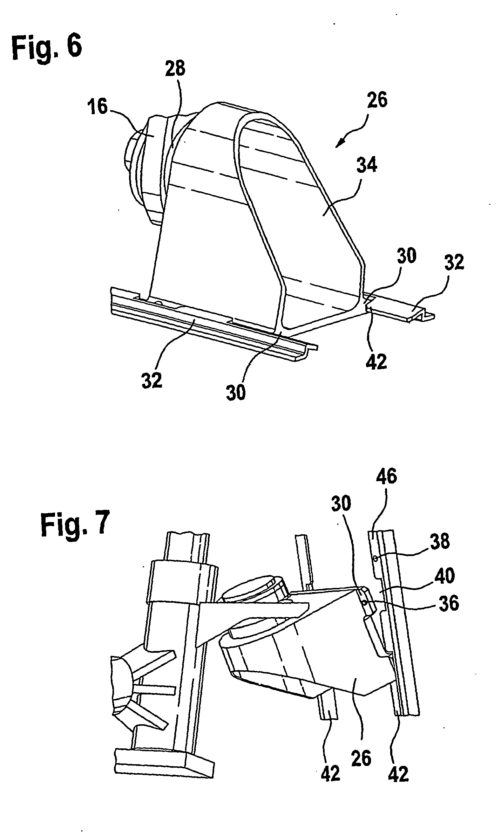

In Figur 6 ist das Befestigungsteil 26 nochmals im Detail dargestellt. Die im Wesentlichen U-förmige Platte ist mittels des Dämpfungselementes 28 und einer Schraube mit dem Wischerlager 16 verbunden. Kragenartig erstrecken sich vom Rand der Platte, parallel zur Längserstreckung der Wischerwelle 18, die Stabilisierungswände 34 nach unten. Auf der der Basis abgewandten Seite ist die Stabilisierungswand 34 nach außen fortgesetzt, sodass zwei Schienen 30 gebildet sind, die jeweils in der Mitte ihrer Längserstreckung ausgespart sind. Diese gleiten in im Wesentlichen im Querschnitt teilweise Z-förmigen länglichen Führungen, die an einem Ende so in Richtung des Karosserieblechs gebogen sind, dass der Anschlag 42 entsteht. Die Führung 32 weist entlang ihrer Längserstreckung Aussparungen 40 auf, die mit den Aussparungen der Schienen 30 korrespondieren. Die Führung 32 ist entweder einstückig aus einem Teil der Karosserie hergestellt oder als Stanzbiegeteil aus einer Blechplatte herausgestanzt, die im Kraftfahrzeug an der Karosserie verschweißt ist.

In Figur 7 ist das Befestigungsteil 26 nach dem Entkoppeln von dem Karosserieblech weggekippt dargestellt. Die Schienen 30 sind so korrespondierend zur Führung 32 angeordnet, dass die Aussparungen 40 das Befestigungselement 26 in der unteren Anschlagposition freigeben. Die Führung 32 ist im oberen, den Wischerarmen zugewandten Bereich etwas aufgeweitet, sodass die Schienen 30 in diese Aufweitung als Einsetzmittel 46 leicht eingeführt werden können. Dadurch wird die Montage der Scheibenwischvorrichtung 10 im Kraftfahrzeug erleichtert. Durch die Bolzen 36, die in die Öffnungen 38 eingreifen, wird das Befestigungsteil arretiert. Bei Belastung, insbesondere einer Schlagbelastung durch einen auf die Wischerwelle 18 aufprallenen Fußgänger, werden die Bolzen 36 abgeschert, wodurch das Befestigungsteil 26 bis zur unteren Anschlagsposition, die durch die Anschläge 42 gebildet ist, zu gleiten vermag. Durch den Nocken 44 wird das Befestigungsteil an dieser Stelle von der Karosserie weggekippt.

Bei einer Scheibenwischvorrichtung 10 mit zwei Wischerwellen 16, 18 kann das hier gezeigte Befestigungsteil 26 nur auf einer Seite, beispielsweise nur auf der Fahrerseite des Kraftfahrzeugs vorgesehen sein, oder aber auf beiden Seiten der Scheibenwischvorrichtung 10, also an beiden Enden des Rohres 12. Natürlich ist es auch möglich, einen oder einen weiteren Befestigungspunkt im Bereich im Bereich der Antriebseinrichtung 22 oder an einer anderen Stelle am Träger 12 anzuordnen. Sinnvoll ist es hierbei, wenn die Befestigung eine Drehbewegung in der Ebene der Längserstreckung der Wischerwellen 16, 18 zuläßt, um das Abtauchen der Wischerwellen 16, 18 bei einem Aufprall zu erleichtern.

## Patentansprüche

1. Scheibenwischvorrichtung (10), insbesondere für ein Kraftfahrzeug, mit mindestens einem Befestigungsteil (26) das die Scheibenwischvorrichtung (10) an der Karosserie des Kraftfahrzeugs befestigt, wobei das Befestigungsteil (26) mindestens ein Mittel (30) aufweist, das in einer Führung (32) an der Karosserie beweglich ist, wobei die Führung (32) als Schienenführung ausgebildet ist in der das mindestens eine Mittel (30) zu gleiten vermag **dadurch gekennzeichnet, daß** die Führung (32) und/oder das Befestigungsteil (26) mindestens ein Rastelement (36) zur Arretierung der Scheibenwischvorrichtung (10) aufweisen und das mindestens eine Rastelement (36) derart ausgebildet ist, daß bei Schlagbelastung die Arretierung gelöst wird.

2. Scheibenwischvorrichtung (10) nach einem der vorhergehenden Ansprüche, **dadurch gekennzeichnet, dass** die Führung (32) und/oder das mindestens eine Mittel (30) mindestens ein Entkopplungsmittel (44) zur Entkopplung von Befestigungsteil (26) und Führung (32) aufweisen.

3. Scheibenwischvorrichtung (10) nach Anspruch 2, **dadurch gekennzeichnet, dass** mindestens ein Löseelement vorgesehen ist, das das Befestigungsteil (26) bei Entkopplung aus der Führung (32) löst, insbesondere kippt.

4. Scheibenwischvorrichtung (10) nach einem der vorhergehenden Ansprüche, **dadurch gekennzeichnet, dass** die Führung (32) und/oder das mindestens eine Mittel (30) mindestens ein Einsetzmittel (46) zum leichten Verbinden von Führung (32) und Mittel (30) aufweisen.

5. Scheibenwischvorrichtung (10) nach einem der vorhergehenden Ansprüche, **dadurch gekennzeichnet, dass** mindestens ein Träger (12) vorgesehen ist, der die wesentlichen Komponenten der Scheibenwischvorrichtung (10) trägt und das Befestigungsteil (26) mittels eines Dämpfungselements (28) an dem mindestens einen Träger (12) befestigt ist.

6. Scheibenwischvorrichtung (10) nach einem der vorhergehenden Ansprüche, **dadurch gekennzeichnet, dass** mindestens ein Träger (12) vorgesehen ist, der die wesentlichen Komponenten der Scheibenwischvorrichtung (10) trägt und mindestens einen Biegebereich (24) mit verminderter Biegesteifigkeit aufweist.

## Claims

1. Windscreen wiping device (10), especially for a motor vehicle, with at least one fastening part (26) which fastens the windscreen wiping device (10) to the body of the motor vehicle, wherein the fastening part (26) has at least one means (30) which is movable in a guide (32) on the body, and wherein the guide (32) is designed as a rail guide in which the at least one means (30) is capable of sliding, **characterized in that** the guide (32) and/or the fastening part (26) have/has at least one latching element (36) for locking the windscreen wiping device (10), and the at least one latching element (36) is designed in such a manner that the locking is released upon impact loading.

2. Windscreen wiping device (10) according to one of the preceding claims, **characterized in that** the guide (32) and/or the at least one means (30) have/has at least one decoupling means (44) for decoupling fastening part (26) and guide (32).

3. Windscreen wiping device (10) according to Claim 2, **characterized in that** there is at least one release element which releases, in particular tilts, the fastening part (26) upon decoupling from the guide (32).

4. Windscreen wiping device (10) according to one of the preceding claims, **characterized in that** the guide (32) and/or the at least one means (30) have/has at least one insert means (46) for the easy connection of the guide (32) and means (30).

5. Windscreen wiping device (10) according to one of the preceding claims, **characterized in that** there is at least one carrier (12) which carries the essential components of the windscreen wiping device (10), and the fastening part (26) is fastened to the at least one support (12) by means of a damping element (28).

6. Windscreen wiping device (10) according to one of the preceding claims, **characterized in that** there is at least one carrier (12) which carries the essential components of the windscreen wiping device (10) and has at least one bending region (24) of reduced flexural rigidity.

## Revendications

1. Dispositif d'essuie-glace (10), notamment pour un véhicule automobile, avec au moins une pièce de fixation (26) qui fixe le dispositif d'essuie-glace (10) à la carrosserie du véhicule automobile, dans lequel la pièce de fixation (26) présente au moins un moyen (30) qui est mobile dans un guide (32) sur la carrosserie, dans lequel le guide (32) est réalisé sous la forme d'un rail de guidage dans lequel ledit au moins un moyen (30) peut coulisser, **caractérisé en ce que** le guide (32) et/ou la pièce de fixation (26) présentent au moins un élément d'arrêt (36) pour le blocage du dispositif d'essuie-glace (10) et ledit au moins un élément d'arrêt (36) est configuré de telle manière que le blocage soit levé en cas de sollicitation par choc.

2. Dispositif d'essuie-glace (10) selon la revendication précédente, **caractérisé en ce que** le guide (32) et/ou ledit au moins un moyen (30) présentent au moins un moyen de découplage (44) pour découpler la pièce de fixation (26) et le guide (32).

3. Dispositif d'essuie-glace (10) selon la revendication 2, **caractérisé en ce qu'**il est prévu au moins un moyen de séparation, qui sépare, en particulier bascule, la pièce de fixation (26) hors du guide (32) lors du découplage.

4. Dispositif d'essuie-glace (10) selon l'une quelconque des revendications précédentes, **caractérisé en ce que** le guide (32) et/ou ledit au moins un moyen (30) présentent au moins un moyen d'insertion (46) pour l'assemblage aisé du guide (32) et du moyen (30).

5. Dispositif d'essuie-glace (10) selon l'une quelconque des revendications précédentes, **caractérisé en ce qu'**il est prévu au moins un support (12), qui porte les composants essentiels du dispositif d'essuie-glace (10) et la pièce de fixation (26) est fixée audit au moins un support (12) au moyen d'un élément d'amortissement (28).

6. Dispositif d'essuie-glace (10) selon l'une quelconque des revendications précédentes, **caractérisé en ce qu'**il est prévu au moins un support (12), qui porte les composants essentiels du dispositif d'essuie-glace (10) et présente au moins une zone de flexion (24) présentant une rigidité à la flexion réduite.
